(19) Europäisches Patentamt

European Patent Office

Office européen des brevets

(11) **EP 1 849 825 A1**

(12) **EUROPEAN PATENT APPLICATION**

(43) Date of publication:
**31.10.2007 Bulletin 2007/44**

(51) Int Cl.:
***C08L 23/00*** *(2006.01)*

(21) Application number: **07106816.7**

(22) Date of filing: **24.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **24.04.2006 JP 2006119463**
**19.10.2006 JP 2006285219**

(71) Applicant: **NITTO DENKO CORPORATION**
**Ibaraki-shi,**
**Osaka 567-8680 (JP)**

(72) Inventors:
• **Ui, Takehiro**
**NITTO DENKO CORPORATION**
**Osaka 567-8680 (JP)**
• **Kinpara, Kazuhiko**
**NITTO DENKO CORPORATION**
**Osaka 567-8680 (JP)**
• **Nishikawa, Shinpei**
**NITTO DENKO CORPORATION**
**Osaka 567-8680 (JP)**

(74) Representative: **Schwabe - Sandmair - Marx**
**Stuntzstrasse 16**
**81677 München (DE)**

(54) **Composition for foam filling**

(57) A composition for foam filling contains an ethylene-ethyl acrylate copolymer having a melt flow rate measured at 190°C under a load of 2.16 kg in a range from 2 to 8 g/10 min and/or an ethylene-butyl acrylate copolymer having a melt flow rate measured at 190°C under a load of 2.16 kg in a range from 1 to 6 g/10 min, a foaming agent and an organic peroxide.

FIG. 1

(a)

(b)

EP 1 849 825 A1

**Description**

BACKGROUND OF THE INVENTION

Field of the Invention

The present invention relates to a foam for filling, which is used for filling an empty space of various members and an interior space of hollow members, and a foam filling member and a composition for foam filling, which are used for forming the foam for filling.

Description of the Related Art

It has been conventionally known to fill foam in a hollow member formed as a closed cross section of an automotive pillar or the like for the purpose of preventing the vibration and noise of an engine or wind noise from being transmitted into the vehicle interior of an automobile.

As a foaming material for forming such foam, for example, there is proposed a composition comprising a base polymer containing at least 65% by weight of units derived from ethylene and an olefinically unsaturated methyl acrylate and having MI of 0.1 to 6 and containing 10 to 40% by weight of methyl acrylate, a crosslinking agent, a chemical foaming agent and a foaming agent activator (see Japanese Unexamined Patent Publication No. 2-276836) .

Also, there is proposed a composition for foam filling, comprising a foaming polymer and a foaming agent and a basic oxide, and having the content of the basic oxide being from 0.05 to 70 parts by weight based on 100 parts by weight of the foaming agent (see Japanese Unexamined Patent Publication No. 2005-097586).

In order to form foam in an interior space of a hollow member, a foaming material must be properly disposed so as to fill the interior space with a foamed foaming material without leaving any space.

Then, it has been known that a supporting plate made of a rigid resin allows a forming material to support thereon and is disposed in the interior space of a hollow member. For example, it is proposed to provide a foaming control supporting plate supporting at least one end out of both ends of a foaming material for controlling foaming of the foaming material and disposed in the direction perpendicular to a longitudinal direction of a hollow room, and to integrally forming a locking clip engaged in a mounting hole of a hollow structure with the supporting plate (see Japanese Unexamined Patent Publication No. 8-276488),

SUMMARY OF THE INVENTION

However, a supporting plate for supporting a foaming material must be designed for every internal space to be filled according to the size and shape of an interior space of a hollow member so as to fill the interior space without leaving any space. The supporting plate is commonly molded by injection molding, and thus an expensive metal mold is required every time.

An object of the present invention is to provide a composition for foam filling, which can be properly disposed in a gap between various members or an interior space of a hollow member without leaving any space even if it is not supported with a supporting plate, a foam filling member using the composition for foam filling, and a foam for filling obtained by foaming the composition for foam filling.

The composition for foam filling of the present invention comprises an ethylene-ethyl acrylate copolymer having a melt flow rate measured at 190°C under a load of 2.16 kg in a range from 2 to 8 g/10 min and/or an ethylene-butyl acrylate copolymer having a melt flow rate measured at 190°C under a load of 2.16 kg in a range from 1 to 6 g/10 min, a foaming agent and an organic peroxide.

Also, in the composition for foam filling of the present invention, it is preferable that the foaming agent contains a sulfonylhydrazide compound and/or an azo compound.

Also, in the composition for foam filling of the present invention, it is preferable that the sulfonylhydrazide compound is 4,4'-oxybis(benzenesulfonylhydrazide) and the azo compound is azodicarbonamide.

The foam filling member of the present invention comprises the composition for foam filling as mentioned above and a mounting member which is mounted to the composition for foam filling and is attachable into an interior space of a hollow member.

In the foam filling member of the present invention, it is preferable that the composition for foam filling is molded into a sheet form having bending sections and/or connecting sections on the way in the longitudinal direction, which is bent at the bending sections and/or connected at the connecting sections to be formed into a predetermined shape.

The foam for filling of the present invention is prepared by foaming the above composition for foam filling.

Since the composition for foam filling of the present invention contains an ethylene-ethyl acrylate copolymer having a melt flow rate measured at 190°C under a load of 2 .16 kg in a range from 2 to 8 g/10 min and/or an ethylene-butyl acrylate copolymer having a melt flow rate measured at 190°C under a load of 2.16 kg in a range from 1 to 6 g/10 min as a resin component, it can reduce heat drooping caused by softening upon foaming. Therefore, it is possible to properly dispose the composition for foam filling alone so as to fill a gap between various members or an interior space of a hollow member without leaving any space even if it is not supported with a supporting plate.

Accordingly, the foam filling member of the present invention, which uses the composition for foam filling of the present invention, requires no supporting plate and is prepared at low cost. Also, the foam for filling of the present invention, which is obtained by foaming the composition for foam filling of the present invention, can fill a gap between various members or an interior space of a hollow member without leaving any space.

BRIEF DESCRIPTION OF THE DRAWINGS

Fig. 1 is a process drawing showing an embodiment of a method for filling an interior space of a pillar of a vehicle using a composition for foam filling, a foam filling member and foam for filing of the present invention, in which,
Fig. 1(a) shows a process of mounting a mounting member to the composition for foam filling to fabricate the foam filling member, and installing the foam filling member in a pillar,
Fig. 1(b) shows a process of foaming, crosslinking and curing the composition for foam filling by heating, thereby filling an interior space of the pillar with the resulting foam for filling.
Fig. 2 is a drawing for explaining an evaluation method of heat drooping.
Fig. 3 is a sectional view showing the size and shape of a model pillar used for evaluation of foam filling.
Fig. 4 is a plan view showing the size and shape of a foam filling sheet used for evaluation of foam filling.
Fig. 5 is a drawing for explaining an evaluation method for foam filling.

DETAILED DESCRIPTION OF THE INVENTION

The composition for foam filling of the present invention contains an ethylene-ethyl acrylate copolymer having a melt flow rate measured at 190°C under a load of 2.16 kg in a range from 2 to 8 g/10 min and/or an ethylene-butyl acrylate copolymer having a melt flow rate measured at 190°C under a load of 2.16 kg in a range from 1 to 6 g/10 min, a foaming agent and an organic peroxide. In the following description, an ethylene-ethyl acrylate copolymer and an ethylene-butyl acrylate copolymer are referred to as resin components.

In the present invention, the ethylene-ethyl acrylate copolymer is a random or block copolymer of ethylene and ethyl acrylate, and preferably a random copolymer. In the present invention, an ethylene-ethyl acrylate copolymer having a melt flow rate (hereinafter referred to as MFR) according to JIS K7210 (1999) measured at 190°C under a load of 2.16 kg of 2 to 8 g/10 min, and preferably 3 to 6 g/10 min, is used.

When the MFR is less than the above range, heat drooping upon foaming can be reduced, while hardness upon foaming excessively increases, and thus compositions for foam filling repel and are not fused with each other, resulting in formation of an unfilled space. On the other hand, when the MFR is more than the above range, heat drooping upon foaming increases, resulting in formation of an unfilled space.

In the ethylene-ethyl acrylate copolymer, the ethyl acrylate content (EA content, MDP method) is from, for example, 16 to 35% by mass, and preferably from 18 to 25% by mass; the tension fracture strain (JTS K7161 (1999) 1BA-shaped test specimen, or JIS K7162 (1999) 1BA-shaped test specimen) is, for example, from 760 to 850%, and preferably 790 to 850%; the stiffness modulus of elasticity (JIS K7106) is, for example, from 10 to 40 MPa, and preferably from 14 to 35 MPa; the hardness (Shore A, JIS K7215 (1986)) is, for example, from 70 to 92 HS, and preferably from 75 to 90 HS; the softening temperature (BiCat, JIS K7206 (1999)) is, for example, from 35 to 60°C, and preferably from 38 to 55°C; the melting point (JIS K7121 (1987)) is, for example, from 70 to 90°C, and preferably from 75 to 85°C; and the glass transition temperature (DVE method) is, for example, from -40 to -32°C, and preferably from -38 to -35°C.

The ethylene-ethyl acrylate copolymer can be used alone, or two or more kinds of ethylene-butyl acrylate copolymers having different compositions and physical properties can be appropriately selected and used, or commercially available products can be used.

In the present invention, the ethylene-butyl acrylate copolymer is a random or a block copolymer, preferably a random copolymer, of ethylene and butyl acrylate. In the present invention, an ethylene-butyl acrylate copolymer having MFR of 1 to 6 g/10 min, preferably 1 to 4 g/10 min, and more preferably 1.5 to 3 g/10 min, is used.

When MFR is less than the above range, heat drooping upon foaming can be reduced, while hardness upon foaming excessively increases, and thus compositions for foam filling repel and are not fused with each other, resulting in formation of an unfilled space. On the other hand, when the MFR is more than the above range, heat drooping upon foaming increases, resulting in formation of an unfilled space.

In the ethylene-butyl acrylate copolymer, the butyl acrylate content (EB content, DuPont method) is, for example, from 7 to 35% by mass, and preferably 15 to 30% by mass; the modulus elasticity (ISO 527-1 or JIS K7161) is, for example, from 25 to 80 MPa, and preferably from 30 to 45 MPa; the density (ISO 1183 or JIS K7112) is, for example, from 915 to 935 Kg/m$^3$, and preferably from 920 to 930 Kg/m$^3$; the hardness (Shore A, ISO 868, or JIS K7215) is, for example, from 75 to 100 HS, and preferably from 80 to 95 degree; the softening temperature (BiCat, softening point, JIS K7206 or ISO 306) is, for example, from 35 to 70°C, and preferably from 40 to 65°C; and the melting point (JIS K7121 or ISO 3146) is, for example, from 80 to 120°C, and preferably from 90 to 100°C.

The ethylene-butyl acrylate copolymer can be used alone, or two or more kinds of ethylene-butyl acrylate copolymers having different compositions and physical properties can be appropriately selected and used, or commercially available products can be used.

In the present invention, as the resin component, both the ethylene-ethyl acrylate copolymer and the ethylene-butyl acrylate copolymer can be used, or at least one of them, that is, only the ethylene-ethyl acrylate copolymer or the ethylene-butyl acrylate copolymer can be used alone.

In the present invention, the foaming agent is not specifically limited as long as it can foam a resin component, and includes, for example, a sulfonylhydrazide compound and an azo compound. When a sulfonylhydrazide compound or an azo compound is used, since a foaming gas is a nitrogen gas, high foaming can be realized because of low permeability to the resin component.

In the present invention, the sulfonylhydrazide compound is not specifically limited as long as it is a compound having at least one -SO$_2$-NHNH$_2$ group in the molecule, and the examples thereof include 4,4'-oxybis(benzenesulfonylhydrazide), p-toluenesulfonylhydrazide, 2,4-toluenedisulfonylhydrazide, p,p-bis(benzenesulfonylhydrazide)ether, benzene-1,3-disulfonylhydrazide and benzenesulfonylhydrazide. In view of foamability and safety, 4,4'-oxybis(benzenesulfonylhydrazide) is exemplified. That is, the use of 4,4'-oxybis(benzenesulfonylhydrazide) can decrease noxiousness on the human body because of free from mutagenicity, and also can increase an amount of gas evolved per unit weight.

In the present invention, the azo compound is not specifically limited as long as it is a compound having at least one -N=N- group in the molecule, and includes, for example, azodicarbonamide, barium azodicarboxylate and azobis isobutyronitrile. In view of foamability, azodicarbonamide is preferable. That is, the use of azodicarbonamide can decrease noxiousness on the human body because of free from mutagenicity, and also can increase an amount of gas evolved per unit weight.

The foaming agent can be used alone, or two or more kinds of foaming agents can be appropriately selected and used.

As the foaming agent other than the sulfonylhydrazide compound and the azo compound, for example, N-nitroso compounds such as N,N'-dinitrosopentamethylenetetramine, inorganic foaming agents such as sodium hydrogen carbonate and a thermal expansion micro balloon are known.

However, it is required to suppress the use of N,N'-dinitrosopentamethylenetetramine in view of mutagenicity. Although sodium hydrogen carbonate is decomposed to generate a carbon dioxide gas, the carbon dioxide gas has good permeability to a resin component, thus making it difficult to foam in a high foaming ratio. In case of the thermal expansion micro balloon, a large amount of the thermal expansion micro balloon must be added to the resin component. However, when a large amount of the thermal expansion micro balloon is added, viscosity increases due to an outer shell encapsulating a gas thereinto, thus making it difficult to foam in a high foaming ratio.

These foaming agents such as N-nitroso compounds, inorganic foaming agents as described above, and other known compounds, for example, such as fluorinated alkane, hydrazine compounds, semicarbazide compounds and triazole compounds can be used in combination with a sulfonylhydrazide compound and an azo compound according to the purposes and applications.

Although the amount of the foaming agent is not specifically limited and is, for example, from 5 to 35 parts by weight, and preferably from 10 to 25 parts by weight, based on 100 parts by weight of the resin component. When the amount is less than the above range, a foaming ratio corresponding to the amount cannot be obtained and thus a cost demerit may occur.

In the present invention, an organic peroxide is not specifically limited as long as it is a crosslinking agent for crosslinking a resin component and a radical generator capable of crosslinking the resin component through generation of a free radical, and include, for example, dicumyl peroxide, 1,1-ditertiarybutylperoxy-3,3,5-trimethylcyclohexane, 2,5-dimethyl-2,5-ditertiarybutylperoxyhexane, 2,5-dimethyl-2,5-ditertiarybutylperoxyhexane, 1,3-bis(tertiarybutylperoxyisopropyl)benzene, tertiarybutylperoxyketone and tertiarybutylperoxy benzoate.

These organic peroxides can be used alone, or two or more kinds of organic peroxides can appropriately be selected and used.

The amount of the organic peroxide is not specifically limited, and is, for example, from 0.1 to 10 parts by weight, and preferably from 1 to 5 parts by weight, based on 100 parts by weight of the resin component. When the amount of the organic peroxide is less than the above range, crosslinking degree is insufficient and heat drooping increases, resulting in formation of an unfilled space. On the other hand, when the amount of the organic peroxide is more than the above range, an organic peroxide, which is not involved in crosslinking, is produced and thus a cost demerit may occur.

In the present invention, a composition for foam filling can be properly mixed with fillers, foam auxiliary agents, other crosslinking agents, crosslinking promoters, processing aids and/or basic oxides according to the purposes and applications. Furthermore, known additives such as stabilizers, plasticizers, anti-aging agents, antioxidants, pigments, colorants, fungicides and flame retardants can be appropriately added according to the purposes and applications.

The filler is not specifically limited and examples thereof include calcium carbonate, aluminum hydroxide, magnesium carbonate, magnesium hydroxide, calcium oxide, silicic acid and the salts thereof, mica, clay, talc, mica powder, bentonite, silica, glass beads, glass balloon, Shirasu balloon, alumina, aluminum silicate, aluminum powder, carbon black, acetylene black and Chinese white.

These fillers can be used alone, or two or more kinds of fillers can be appropriately selected and used. The amount of the filler is appropriately selected according to the purposes and applications. By mixing with the filler, a reinforcing effect is improved.

Examples of the foam auxiliary agent include metal stearates, urea compounds, salicylic acid compounds and benzoic acid compounds.

These foam auxiliary agents can be used alone, or two or more kinds of foam agents can be appropriately selected and used. The amount of the foam auxiliary agent can be appropriately selected according to the purposes and applications.

Examples of the crosslinking agent include sulfur, sulfur compounds, selenium, magnesium oxide, lead monoxide, zinc oxide, oximes such as p-quinonedioxime and p, p' -dibenzoyl quinonedioxime, nitroso compounds such as p-dinitrosobenzene, resins such as alkylphenol-formaldehyde resins and melamine-formaldehyde condensates, and ammonium salts such as ammonium benzoate.

These crosslinking agents can be used alone, or two or more kinds of crosslinking agents can be appropriately selected and used. The amount of a crosslinking agent is appropriately selected according to the purposes and applications.

Examples of the crosslinking promoter include dithiocarbamic acids, thiazoles, guanidines, sulfenamides, tiurams, xanthogens, aldehyde ammonias, aldehyde amines and thioureas.

These crosslinking promoters can be used alone, or two or more kinds of crosslinking promoters can be appropriately selected and used. The amount of a crosslinking promoter is appropriately selected according to the purposes and applications.

Examples of the processing aid include lubricants such as stearic acid and esters thereof.

These processing aids can be used alone, or two or more kinds of processing aids can be appropriately selected and used. The amount of a processing aid is appropriately selected according to the purposes and applications.

Examples of the basic oxide include calcium oxide, magnesium oxide, ferrous oxide and ferric oxide.

These basic oxides can be used alone, or two or more kinds of basic oxides can be appropriately selected and used.

The amount of the basic oxide is not specifically limited and is, for example, from 0.05 to 70 parts by weight, and preferably from 0.1 to 50 parts by weight, based on 100 parts by weight of the foaming agent. By mixing with the basic oxide, rust prevention is improved.

The composition for foam filling of the present invention is prepared as a kneaded composition by mixing the above described components in the above described amounts, although it is not specifically limited, kneading the mixture by a mixing roller, pressure kneader or extruder under the temperature conditions where less decomposition of the foaming agent occurs.

In the preparation, a flow tester viscosity (120°C, load of 40 Kg)of resulting kneaded composition is set to be $1 \times 10^3$ to $1 \times 10^5$ Pa·s, and preferably $3 \times 10^3$ to $3 \times 10^4$ Pa·s. When the viscosity of the kneaded composition is within the above range, the kneaded composition can be foamed in a proper foaming ratio.

Furthermore, in the present preparation, the resulting kneaded composition can be prepared as a preform by molding the composition into a predetermined shape.

Although the molding method of the kneaded composition is not specifically limited, the kneaded composition is molded, for example, by palletizing it using a pelletizer and molding the resulting pellets into a predetermined shape under the temperature conditions where less decomposition of the foaming agent occurs using an injection molding machine or an extruder, or directly molding it into a predetermined shape by a calendar or press molding.

The foam for filling of the present invention can be formed by foaming, crosslinking and curing through heating the resulting composition for foam filling of the present invention under appropriate conditions.

The resulting foam for filling of the present invention has a density (weight of foam (g) /volume of foam (cm$^3$)) of, for example, 0.04 to 0.2 g/cm$^3$, and preferably 0.05 to 0.08 g/cm$^3$, and an foaming ratio (density before expansion/ density after expansion) upon foaming of 10 times or more, and preferably 12 to 25 times. When the foaming ratio attains to the above range, an interior space of a hollow member can be filled with the foam for filling without leaving any space even if the internal space of the hollow member has a complicated shape.

Thus, the resulting foam for filling of the present invention provides various members with various filling effects such as reinforcement, vibration suppression, sound insulation, dust control, insulation, buffering and water tight, and it can be preferably used as a filling material for various industrial products such as reinforcing materials, vibration proof materials, sound insulation materials, dust control materials, insulators, buffer and water proof materials, which are filled a gap between various members or an interior space of a hollow member.

Since the composition for foam filling thus obtained has a resin component of an ethylene-ethyl acrylate copolymer having MFR of 2 to 8 g/10 min and/or an ethylene-butyl acrylate copolymer having MFR of 1 to 6 g/10 min, heat drooping by softening upon foaming is reduced. Therefore, even if it is not supported on a supporting plate, the composition for foam filling is properly disposed by itself to fill various members or an interior space of a hollow member without leaving any space. Then the disposed composition for foam filling is heated, foamed, crosslinked and cured to form a foam for filling, which can fill a gap between members or an interior space of a hollow member.

More specifically, for example, when an interior space of a hollow member is filled, a mounting member is mounted to the composition for foam filling to fabricate a foam filling member, and the mounting member of the foam filling member is mounted in the interior space of the hollow member, and also the composition for foam filling is directly formed into the size and shape corresponding to those of the interior space of the hollow member without being supported on an supporting plate, followed by foaming with heating to form foam for filling, and thus the interior space of the hollow member can be surely filled with the composition for foam filling.

In the above case, the composition for foam filling is, for example, molded into a sheet by the above appropriate molding method using an extruder and cut into a strip having a predetermined size, followed by notching, grooving and/or perforating (holes of dotted line) along the direction intersected (perpendicular) to the longitudinal direction on the way in the longitudinal direction so as to form one or more bending sections. Then, the sheet having the size and shape corresponding to an interior space of a hollow member can be formed by bending at a bending section.

To keep the shape after bending at the bending section, for example, engageable notches and/or grooves are formed on at least one side of the composition for foam filling so as to form one or more connecting sections, and compositions for foam filling are internally connected at the connecting sections so as to retain the composition for foam filling in a closed form (cyclic form).

Incidentally, the composition for foam filling can be formed into a predetermined unclosed shape only by forming a bending section, without forming a connecting section, and also formed into a closed shape (loop shape) having no bending section only by forming a connecting section, without forming a bending section.

As the hollow member, a pillar of a vehicle is exemplified. A mounting member is mounted to the composition for foam filling of the present invention to fabricate a foam filling member, which is then mounted in an interior space of a pillar. In the interior space, the composition for foam filling is formed into a size and shape corresponding to those of the interior space of the pillar, and then foamed to form a foam for filling, thus making it possible to effectively prevent vibration and noise of an engine or wind noise from being transmitted into the vehicle interior of an automobile as well as reinforcing the pillar strong enough.

Then, as an example of the embodiment of the composition for foam filling, the foam filling member and foam for filling of the present invention, a method for filling an interior space of a pillar of a vehicle is described below.

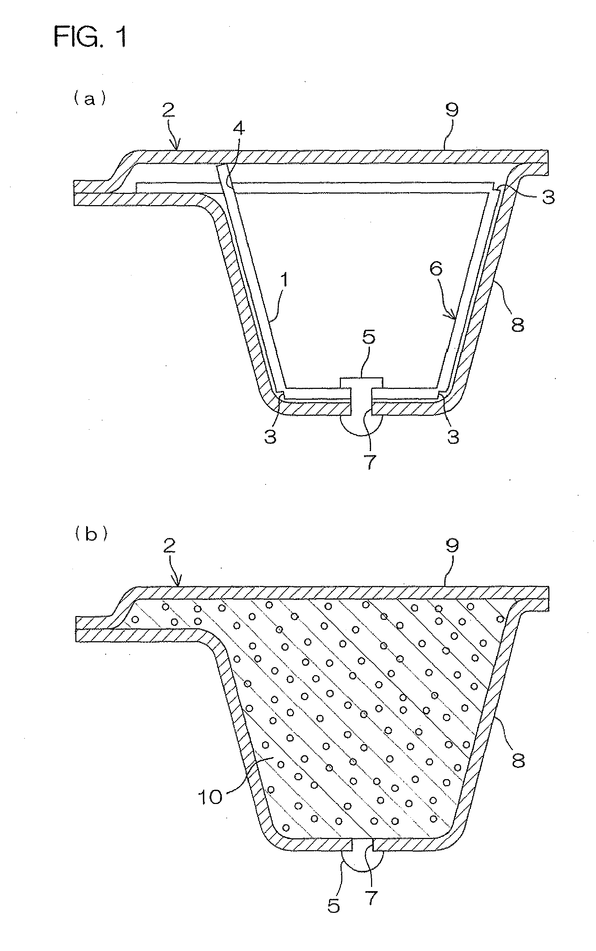

In the method, first, as shown in Fig. 1(a), a composition for foam filling 1 formed into a predetermined shape is placed in a pillar 2.

The composition for foam filling 1 is molded into a sheet by the above appropriate method, and cut into a strip having predetermined length and width. In addition, on the composition for foam filling 1, a bending section 3 formed of notch, groove or perforation is formed at three positions on the way in the longitudinal direction at given intervals. With some distance away therefrom, a connecting section 4 is formed so that opposite sides are notched to the middle way in the width direction. The composition for foam filling 1 is bent at each bending section 3 and connected the opposite sides of the connecting section 4, and thereby formed into a quasi-quadrilateral trapezoid, where one end protrudes at one side.

In order to dispose the composition for foam filling 1 in a pillar 2, a mounting member 5 such as a clip is attached to pass through the composition for foam filling 1 in a thickness direction to prepare a foam filling member 6, and the mounting member 5 of the foam filling member 6 is plugged into a mounting hole 7 of the pillar 2.

The mounting member 5 can be insert molded together with a kneaded composition upon molding of the composition for foam filling 1, other than being mounted onto a molded composition for foam filling 1. In addition, the installment of the mounting member 5 to the pillar 2 can be locked by plugging it into the mounting hole 7 of the pillar 2 as mentioned above, or fixed with absorption or magnetic force by constituting the mounting member 5 with an adhesive disc or a magnet, or mounted by welding by constituting the mounting member 5 with a metal plate.

The pillar 2 is constituted by an inner panel 8 and an outer panel 9 having quasi-concave cross sections, and firstly, the composition for foam filling 1 is disposed in the inner panel 8, that is, the mounting member 5 is mounted to the inner panel 8, and then both ends of the inner panel 8 and the outer panel 9 are faced and contacted with each other, followed by welding to form a closed cross section. In Fig. 1, at one side, the inner panel 8 and the outer panel 9 are disposed so as to sandwich the end protruding toward one side from the composition for foam filling 1.

The pillar 2 includes a front pillar, a side pillar and a rear pillar of a car body.

Then, in this method, after a rust prevention treatment is applied to the inner surface of the pillar 2, as shown in Fig. 1(b), the composition for foam filling 1 is foamed, crosslinked and cured by heating (for example at 110 to 190°C) in the drying line process during baking finish to form a foam for filling 10, and then the interior space of the pillar 2 is filled with the foam for filling 10 without leaving any space.

The shape, disposing site, disposing direction and disposing number and the like of the composition for foam filling 1 are appropriately selected according to the shape of the pillar 2.

In the composition for foam filling 1, since the resin components are an ethylene-ethyl acrylate copolymer having MFR of 2 to 8 g/10 min and/or an ethylene-butyl acrylate copolymer having MFR of 1 to 6 g/10 min, heat drooping by softening upon foaming is reduced. As a result, even if it is not supported on a supporting plate, when the composition for foam filling molded into a sheet form with a bending section 3 and a connecting section 4 thereon to be formed as described above, the sheet can be modified into a shape corresponding to the shape and size of the pillar 2 by itself and properly disposed. And then, the composition for foam filling 1 is foamed, crosslinked and cured so as to fill up the interior space of the pillar 2 without leaving any space.

As a result, a metal mold which is necessary for molding a supporting plate according to a shape of a pillar 2 is not required, and a foam filling member 6 is produced at low cost.

EXAMPLES

The present invention is described in detail by way of examples and comparative examples; however, the present invention is not limited to the following examples and comparative examples.

1) Preparation for each Example and Comparative Example

Compositions for foam filling of Examples 1 to 6 and Comparative Examples 1 to 5 were prepared according to the formulation shown in Table 1. That is, each of the components of an ethylene-ethyl acrylate copolymer or an ethylene-butyl acrylate copolymer, a foaming agent, an organic peroxide and, if necessary, a foam auxiliary agent were kneaded at a temperature of 120°C at a rotation speed of 15 rpm using a 6 inch mixing roller, press molded on a heat press at 120°C for one minute, and molded into a sheet form having a thickness of 3 mm.

In the Table 1, "EEA" is an abbreviation of an ethylene-ethyl acrylate copolymer, "EVA" is an abbreviation of an ethylene-vinyl acetate copolymer, "EMA" is an abbreviation of an ethylene-methacrylic acid copolymer, "EBA" is an abbreviation of an ethylene-butyl acrylate copolymer, "DCP" is an abbreviation of dicumyl peroxide, "OBSH" is an abbreviation of for 4,4'-oxybis(benzenesulfonylhydrazide) and "ADCA" is an abbreviation of azodicarbonamide.

2) Foaming ratio

Each of the compositions of the Examples and Comparative Examples was formed into a sheet and then cut into a size measuring 30 mm × 30 mm to prepare a sample material. The sample material was foamed by heating at 160°C for 20 minutes and the foaming ratio was calculated. The results are shown in Table 1.

The foaming ratio in Table 1 was calculated by the following equation:

```
Foaming ratio = Density before foaming/Density after foaming.
```

3) Heat drooping

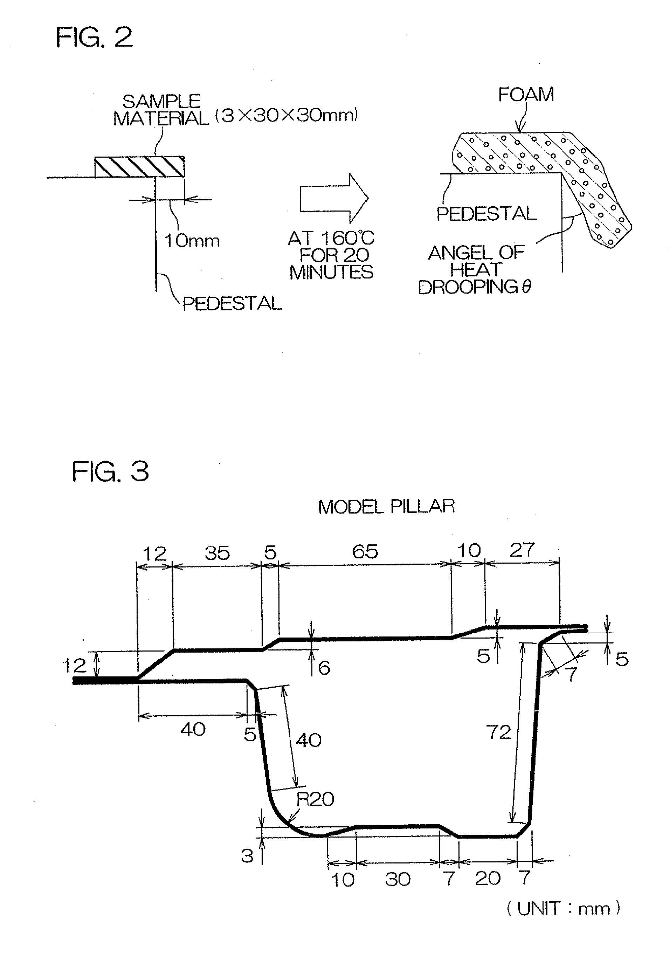

Each of the compositions formed into a sheet in the Examples and Comparative Examples was cut into a size measuring 30 mm × 30 mm to prepare a sample material. The sample material was fixed on a horizontal surface of a pedestal that was flexed to a right angel, as shown in Fig. 2, from horizontal to vertical direction, so as to run off the edge of the pedestal 10 mm. Then, it was heated at 160°C for 20 minutes to foam, and the angel of heat drooping $\theta$ (angel between the vertical surface of a pedestal and the portion running off the pedestal at the facing surface thereof) after foaming was measured. The results are shown in Table 1.

4) Foam filling

Using a model pillar having the dimension and shape shown in Fig. 3, the foam filling of each of the compositions for foam filling in the Examples and Comparative Examples was evaluated.

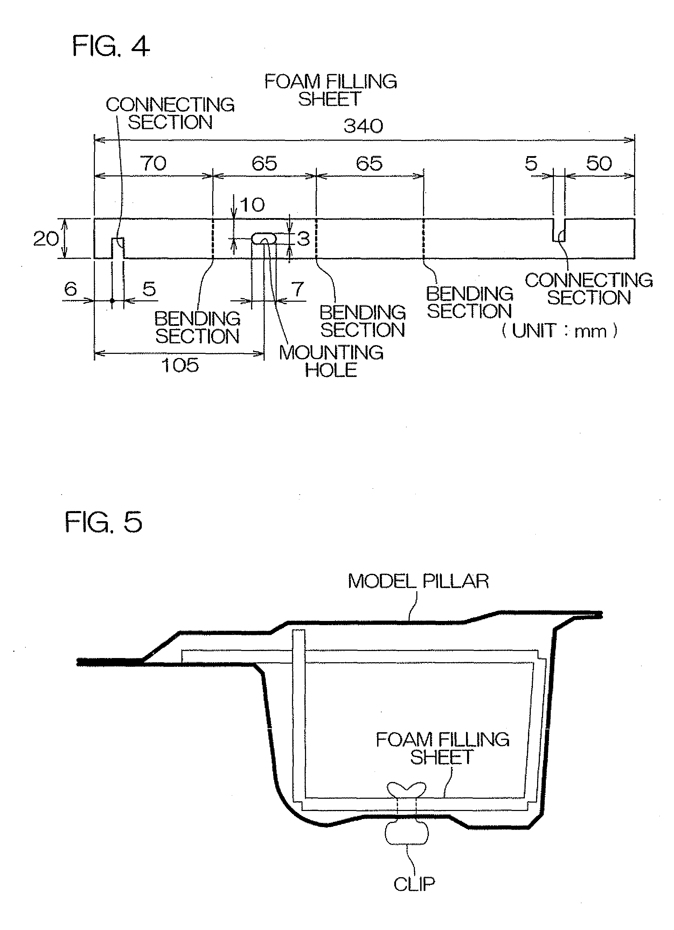

First, each of the compositions formed into a sheet in the Examples and comparative Examples was cut into a strip to prepare a foam filling sheet with the dimension and shape shown in Fig. 4. On the foam filling sheet, bending sections composed of perforations were formed at three positions on the way in the longitudinal direction with some spaces one another. Also, on the outside of the bending sections at both ends in a longitudinal direction, connecting sections were formed at two positions which were counter notched each other up to the middle across the width direction. Also, a mounting hole was formed at one position for mounting a clip between the bending sections.

As shown in Fig. 5, the foam filling sheet was bent at each bending section at the same time as being connected at the connecting sections by engaging each other, so as to be formed into a quasi-quadrilateral trapezoid whose one end protrudes toward one side. Then, a clip composed of a hard resin was plugged in a pillar and inserted in a mounting hole simultaneously, whereby the foam filling sheet was mounted onto the pillar.

Then, the sheet was heated at 160°C for 20 minutes to foam, and the foam filling was evaluated by visual observation. The results are shown in Table 1.

[Table 1]

Table 1

| Formulation (Parts by weight) | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|
| Resin Component | EEA*1 | 100 | 0 | 100 | 0 | 0 | 0 | 0 | 0 | 0 | 0 | 0 |
| | EEA*2 | 0 | 100 | 0 | 0 | 0 | 0 | 0 | 0 | 0 | 0 | 0 |
| | EEA*3 | 0 | 0 | 0 | 0 | 0 | 0 | 100 | 0 | 0 | 0 | 0 |
| | EEA*4 | 0 | 0 | 0 | 0 | 0 | 0 | 0 | 100 | 0 | 0 | 0 |
| | EVA*5 | 0 | 0 | 0 | 0 | 0 | 0 | 0 | 0 | 100 | 0 | 0 |
| | EMA*6 | 0 | 0 | 0 | 0 | 0 | 0 | 0 | 0 | 0 | 100 | 0 |
| | EBA*7 | 0 | 0 | 0 | 100 | 0 | 100 | 0 | 0 | 0 | 0 | 0 |
| | EBA*8 | 0 | 0 | 0 | 0 | 100 | 0 | 0 | 0 | 0 | 0 | 0 |
| | EBA*9 | 0 | 0 | 0 | 0 | 0 | 0 | 0 | 0 | 0 | 0 | 100 |
| Crosslinking Agent | DCP*10 | 5 | 5 | 5 | 5 | 5 | 5 | 5 | 5 | 5 | 5 | 5 |
| Foaming Agent | OBSH*11 | 20 | 20 | 0 | 20 | 20 | 0 | 20 | 20 | 20 | 20 | 20 |
| | ADCA*12 | 0 | 0 | 20 | 0 | 0 | 20 | 0 | 0 | 0 | 0 | 0 |
| Foam Auxiliary Agent | Zinc Stearate | 0 | 0 | 5 | 0 | 0 | 5 | 0 | 0 | 0 | 0 | 0 |
| Foaming Ratio | | 16.4 | 13.7 | 17.0 | 20.4 | 14.1 | 20.0 | 16.0 | 15.6 | 11.0 | 15.5 | 7.4 |
| Angle of Heat Drooping | | 56° | 22° | 62° | 90° | 60° | 90° | I4° | 90° | 0° | 0° | 0° |

| Formulation (Parts by weight) | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|
| Foam Filling | No Unfilled Space | No Unfilled Space | No Unfilled Space | No Unfilled Space | No Unfilled Space | No Unfilled Space | Leaving Unfilled Space | Leaving Unfilled Space | Leaving Unfilled Space | Leaving Unfilled Space | Leaving Unfilled Space |

*1 Evaflex EEA A702 (MFR5, Ethyl acrylate content: 19% by mass) manufactured by DU PONT-MITSUI POLYCHEMICALS CO., LTD.

*2 Evaflex EEA A703 (MFR5, Ethyl acrylate content: 25% by mass) manufactured by DU FONT-HITSUI POLYCHEMICALS CO., LTD.

*3 Evaflex EEA A710 (MFR0.5, Ethyl acrylate content: 25% by mass) manufactured by DU PONT-MITSUI POLYCHEMICALS CO., LTD.

*4 Evaflex EEA A712 (MFR9, Ethyl acrylate content: 25% by mass) manufactured by DU PONT-MITSUI POLYCHEMICALS CO., LTD.

*5 Evaflex EVA EV460 (MFR2.5, Vinyl acetate content: 19% by mass) manufactured by DU PONT-MITSUI POLYCHEMICALS CO., LTD.

*6 Nucrel N0903HC (MFR3, Acid content: 9% by mass) manufactured by DU PONT-MITSUI POLYCHEMICALS CO., LTD.

*7 Elvaloy 3117AC (MFR1.5, Butyl acrylate content: 17% by mass) manufactured by DU PONT-MITSUI POLYCHEMICALS CO., LTD.

*8 Elvaloy 3427AC (MFR4, Butyl acrylate content: 27% by mass) manufactured by DU PONT-MITSUI POLYCHEMICALS CO., LTD.

*9 Elvaloy 3717AC (MFR7, Butyl acrylate content: 17% by mass) manufactured by DU PONT-MITSUI POLYCHEMICALS CO., LTD.

*10 Parkmil D-40MBK (DCP content: 40% by weight, silica + EPDM content: 60% by weight) manufactured by NOF CORP.

*11 Cellmic SX manufactured by SANKYO KASEI CO. LTD.

*12 Vinyfor AC#LQ EIWA manufactured by EIWA CHEMICAL IND. CO. LTD.

**Claims**

1. A composition for foam filling, comprising an ethylene-ethyl acrylate copolymer having a melt flow rate measured at 190°C under a load of 2.16 kg in a range from 2 to 8 g/10 min and/or an ethylene-butyl acrylate copolymer having a melt flow rate measured at 190°C under a load of 2.16 kg in a range from 1 to 6 g/10 min, a foaming agent and an organic peroxide.

2. The composition for foam filling according to claim 1, wherein the foaming agent contains a sulfonylhydrazide compound and/or an azo compound.

3. The composition for foam filling according to claim 2, wherein the sulfonylhydrazide compound is 4,4'-oxybis(benzenesulfonylhydrazide) and the azo compound is azodicarbonamide.

4. A foam filling member comprising a composition for foam filling and a mounting member which is mounted to the composition for foam filling and is attachable into an interior space of a hollow member,
wherein the composition for foam filling contains an ethylene-ethyl acrylate copolymer having a melt flow rate measured at 190°C under a load of 2.16 kg in a range from 2 to 8 g/10 min and/ or an ethylene-butyl acrylate copolymer having a melt flow rate measured at 190°C under a load of 2.16 kg in a range from 1 to 6 g/10 min, a foaming agent and an organic peroxide.

5. The foam filling member according to claim 4, wherein the composition for foam filling is molded into a sheet form having bending sections and/or connecting sections on the way in the longitudinal direction, which is bent at the bending sections and/or connected at the connecting sections to be formed into a predetermined shape.

6. A foam for filling, which is prepared by foaming a composition for foam filling, containing an ethylene-ethyl acrylate copolymer having a melt flow rate measured at 190°C under a load of 2.16 kg in a range from 2 to 8 g/10 min and/or an ethylene-butyl acrylate copolymer having a melt flow rate measured at 190°C under a load of 2.16 kg in a range from 1 to 6 g/10 min, a foaming agent and an organic peroxide.

# FIG. 1

(a)

(b)

# FIG. 2

SAMPLE
MATERIAL (3×30×30mm)

10mm

PEDESTAL

AT 160℃
FOR 20
MINUTES

FOAM

PEDESTAL

ANGEL OF
HEAT
DROOPING θ

# FIG. 3

MODEL PILLAR

12    35    5    65    10    27

12

40    5    40

R20

3

10    30    7    20    7

5

7    5

72

6

( UNIT : mm )

## FIG. 4

CONNECTING
SECTION

FOAM FILLING
SHEET

340

70     65     65     5     50

10

20     3

6     5     7

BENDING
SECTION

BENDING
SECTION

BENDING
SECTION

CONNECTING
SECTION

MOUNTING
HOLE

( UNIT : mm )

105

## FIG. 5

MODEL PILLAR

FOAM FILLING
SHEET

CLIP

14

**European Patent Office**

**EUROPEAN SEARCH REPORT**

Application Number

EP 07 10 6816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/039428 A (DU PONT [US]; HAUSMANN KARLHEINZ [CH]; BRUN YEFIM [US]; WALLACH JOERG) 13 April 2006 (2006-04-13) <br> * the whole document * <br> ----- | 1-6 | INV. <br> C08L23/00 |
| X | US 6 492 453 B1 (EBRAHIMIAN SHAHZAD [US] ET AL) 10 December 2002 (2002-12-10) <br> * the whole document * <br> ----- | 1-6 | |
| X | GB 2 350 115 A (GOODYEAR TIRE & RUBBER [US]) 22 November 2000 (2000-11-22) <br> * the whole document * <br> ----- | 1-6 | |
| X | US 5 783 611 A (STREBEL JEFFREY J [US]) 21 July 1998 (1998-07-21) <br> * the whole document * <br> ----- | 1-6 | |
| | | | **TECHNICAL FIELDS SEARCHED (IPC)** <br><br> C08L |

The present search report has been drawn up for all claims

| Place of search | Date of completion of the search | Examiner |
|---|---|---|
| Munich | 22 May 2007 | Glomm, Bernhard |

EPO FORM 1503 03.82 (P04C01)

**ANNEX TO THE EUROPEAN SEARCH REPORT
ON EUROPEAN PATENT APPLICATION NO.**  EP 07 10 6816

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2007

| Patent document cited in search report | | Publication date | Patent family member(s) | | Publication date |
|---|---|---|---|---|---|
| WO 2006039428 | A | 13-04-2006 | NONE | | |
| US 6492453 | B1 | 10-12-2002 | US 2003125439 | A1 | 03-07-2003 |
| GB 2350115 | A | 22-11-2000 | US 2001006997 | A1 | 05-07-2001 |
| US 5783611 | A | 21-07-1998 | US 5830392 | A | 03-11-1998 |
| | | | US 5922778 | A | 13-07-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2276836 A
- JP 2005097586 A

- JP 8276488 A